# EUROPEAN PATENT APPLICATION

(11) **EP 4 821 655 A1**
(43) Date of publication of application: **14.10.2026**
(21) Application number: 24900287.4
(22) Date of filing: 10.10.2024
(51) Int. Cl.: B29C 45/76

(54) **DATA COLLECTION METHOD, DATA COLLECTION DEVICE, AND COMPUTER PROGRAM**

(30) Priority: 05.12.2023 JP 2023205517
(71) Applicant: The Japan Steel Works, Ltd., Tokyo 141-0032 (JP)
(72) Inventor: YOKOTA, Takumi, Tokyo 141-0032 (JP); SAEKI, Akihiko, Tokyo 141-0032 (JP); AKAGI, Takashi, Tokyo 141-0032 (JP)
(74) Representative: Simmons & Simmons LLP (Munich)
(86) International application number: PCT/JP2024/036214
(87) International publication number: WO 2025/120991

(57) **Abstract**

According to the present invention: time-series physical quantity data related to the operation of an injection molding machine is acquired, the physical quantity data being obtainable in an injection molding step of a molded article by using the injection molding machine; and the physical quantity data acquired over a plurality of injection molding cycles is stored in a storage unit in association with a character string reflecting a molding condition set in the injection molding machine and a collection period of the physical quantity data.

## Description

### Technical Field

The present invention relates to a data collection method, a data collection device and a computer program.

### Background Art

An injection molding machine monitoring a state of a resin in an injection cylinder is disclosed that detects the amount of energy consumed for plasticizing resin and estimates a state of the resin in the injection cylinder based on the consumed energy to judge the quality of a molded product (e.g., Patent Literature 1). Specifically, the injection molding machine compares the detected consumed energy and a reference power, which is a standard power to be consumed for producing a molded product with appropriate quality and judges the molded product as having poor quality if the difference is equal to or more than a predetermined value.

### Citation List

### Patent Literature

Patent Literature 1: Japanese Patent Application Laid-Open Publication No. 2012-091424

### Summary of Invention

### Technical Problems

Patent Literature 1, however, does not disclose a technique of monitoring the operation of an injection molding machine and storing physical quantity data obtained through the monitoring taking utilization of the obtained data into consideration.

An object of the present disclosure is to provide a data collection method, a data collection device and a computer program that can collect and store physical quantity data acquired over multiple injection molding cycles while easy utilization of the acquired data is achieved.

### Solution to Problems

A data collection method according to one aspect of the present disclosure comprises: acquiring time-series physical quantity data related to an operation of an injection molding machine acquired in an injection molding process for a molded product with the injection molding machine; and storing in a storage unit physical quantity data acquired over a plurality of injection molding cycles in association with a character string incorporating a molding condition set in the injection molding machine and a collection period of the physical quantity data.

A data collection device according to one aspect of the present disclosure is a data collection device comprising a processing unit, and the processing unit acquires time-series physical quantity data related to an operation of an injection molding machine acquired in an injection molding process for a molded product with the injection molding machine; and stores in a storage unit physical quantity data acquired over a plurality of injection molding cycles in association with a character string incorporating a molding condition set in the injection molding machine and a collection period of the physical quantity data.

A computer program according to one aspect of the present disclosure causes a computer to execute processing of: acquiring time-series physical quantity data related to an operation of an injection molding machine acquired in an injection molding process for a molded product with the injection molding machine; and storing in a storage unit physical quantity data acquired over a plurality of injection molding cycles in association with a character string incorporating a molding condition set in the injection molding machine and a collection period of the physical quantity data.

### Advantageous Effects of Invention

According to the present disclosure, it is possible to provide a data collection method, a data collection device and a computer program that can collect and store physical quantity data acquired over multiple injection molding cycles while easy utilization of the acquired data is achieved.

### Brief Description of Drawings

FIG. 1 is a schematic view illustrating an example of the configuration of an injection molding system according to Embodiment 1.
FIG. 2 is a flowchart illustrating a reference data collection processing procedure according to Embodiment 1.
FIG. 3 is a flowchart illustrating a data collection processing procedure according to Embodiment 1.
FIG. 4 is a conceptual diagram illustrating a data collection method according to Embodiment 1.
FIG. 5 is a conceptual diagram illustrating the contents of a file stored by the data collection method according to Embodiment 1.
FIG. 6 is a table depicting an example of logging data items.
FIG. 7 is a table depicting an example of logging data items.
FIG. 8 is a flowchart illustrating a quality estimation processing procedure according to Embodiment 1.
FIG. 9 is a flowchart illustrating a quality estimation processing procedure according to Embodiment 2.

### Description of Embodiments

A data collection method, a data collection device and a computer program according to embodiments of the present disclosure will be described below with reference to the drawings. It should be noted that the present disclosure is not limited to these examples, but is represented by the scope of claims, and is intended to include all modifications within the meaning and scope equivalent to the scope of claims. Furthermore, at least parts of the following embodiments may arbitrarily be combined.

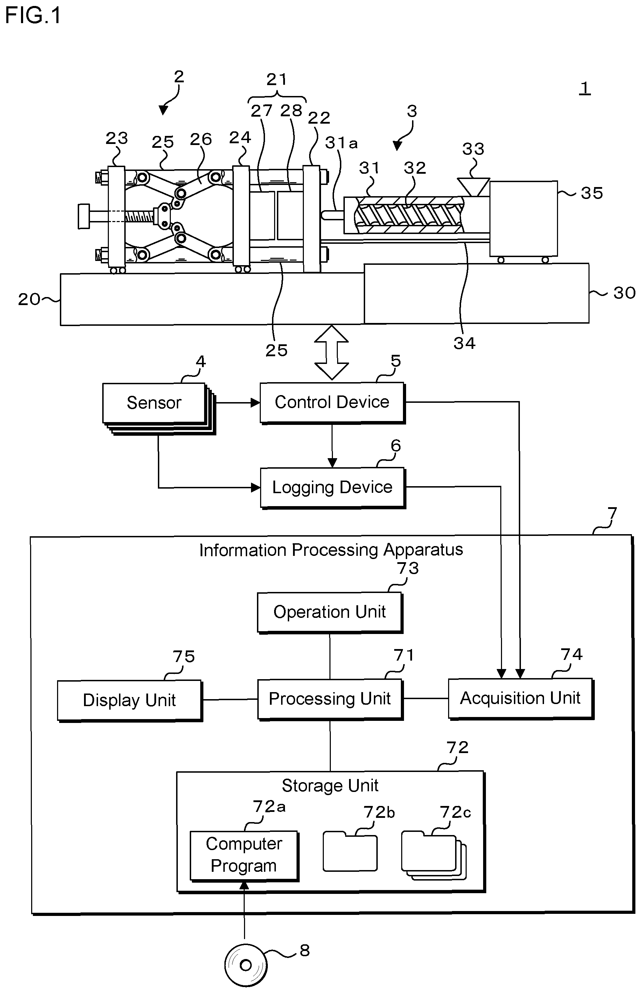

FIG. 1 is a schematic view illustrating an example of the configuration of an injection molding system according to Embodiment 1. The injection molding system according to Embodiment 1 includes an injection molding machine 1, a logging device 6 and an information processing apparatus (data collection device) 7.

### <Injection Molding Machine 1>

The injection molding machine 1 includes a mold clamping device 2 for clamping a metal mold 21, an injection device 3 for plasticizing and injecting molding material, multiple sensors 4 and a control device 5.

The mold clamping device 2 is provided with a fixed platen 22 fixed on a bed 20, a mold clamping housing 23 slidably provided over the bed 20 and a movable platen 24 that similarly slides over the bed 20. The fixed platen 22 and the mold clamping housing 23 are coupled with multiple, for example, four tie-bars 25, 25.... The movable platen 24 is configured to be slidable between the fixed platen 22 and the mold clamping housing 23. Between the mold clamping housing 23 and the movable platen 24, a mold clamping mechanism 26 is provided. The mold clamping mechanism 26 is constructed by a toggle mechanism, for example. Note that the mold clamping mechanism 26 may be composed of a direct pressure mold clamping mechanism, that is, a mold clamping cylinder. The fixed platen 22 and the movable platen 24 are respectively provided with a fixed mold 28 and a movable mold 27, and the metal mold 21 is configured to be opened and closed when the clamping mechanism 26 is driven.

The mold clamping device 2 is further provided with an ejector pin for taking out a molded product from the metal mold 21 and a drive motor for driving the ejector pin.

The injection device 3 is situated on a base 30. The injection device 3 includes a heating cylinder 31 having a nozzle 31a at the tip and a screw 32 provided inside the heating cylinder 31 so as to be rotatably disposed in a circumferential direction and an axial direction. Inside or at the outer circumference of the heating cylinder 31, a heater for melting a molding material is provided. The screw 32 is driven in rotational and axial directions by a drive device 35.

Near the rear of the heating cylinder 31, a hopper 33 for inputting molding materials is provided. The injection molding machine 1 is provided with a nozzle touch device 34 that moves the injection device 3 in the front-back direction (left-right direction in FIG. 1). When the nozzle touch device 34 is driven, the injection device 3 is configured to move forward so that the nozzle 31a of the heating cylinder 31 touches a contact portion of the fixed platen 22.

The multiple sensors 4 are elements and circuits that detect physical quantities related to the quality of a molded product. In other words, the multiple sensors 4 are elements and circuits that detect time-series physical quantities related to the operation of the injection molding machine 1 that are obtained during injection molding processes for molded products using the injection molding machine 1.

The sensors 4 include sensors provided on the injection molding machine 1 as requisites for controlling the operation of the injection molding machine 1 and sensors separately provided for estimating the state of the injection molding machine 1. All or a part of the multiple sensors 4 are connected to the logging device 6, so that the sensors 4 output signals indicating the detected physical quantities to the logging device 6. The information processing apparatus 7 to be described later acquires physical quantity data from the sensors 4 via the logging device 6.
The physical quantity data is data of time-series sensor values indicating the detected physical quantities.

A part of the multiple sensors 4 are connected to the control device 5, so that the information processing apparatus 7 can also acquire physical quantity data from the sensors 4 via the control device 5.

The physical quantities include temperature, position, velocity, acceleration, current, voltage, pressure, time, image data, torque, force, distortion, power consumption, weight and the like. These physical quantities can be measured with a thermometer, a position sensor, a speed sensor, an accelerometer, an ammeter, a voltmeter, a pressure gauge, a timer, a camera, a torque sensor, a wattmeter, a weightometer and the like.

The multiple sensors 4 include, for example, a speed sensor for detecting the speed of the screw 32, a speed sensor for detecting the speed of the movable platen 24 and a speed sensor for detecting the speed of the ejector pin.

The multiple sensors 4 include, for example, a torque sensor for detecting the torque of a motor that drives the screw 32, a torque sensor for detecting the torque of a motor that drives the movable platen 24 and a torque sensor for detecting the torque of a motor that drives the ejector pin.

The multiple sensors 4 include, for example, a pressure sensor for detecting the pressure inside the screw 32 or the heating cylinder 31 and a pressure sensor for detecting the pressure applied to the metal mold 21.

The multiple sensors 4 include a load cell detecting pressure longitudinally applied to the screw 32.

The multiple sensors 4 include, for example, a position sensor for detecting the position of the screw 32, a position sensor for detecting the position of the movable platen 24 and a position sensor for detecting the position of the ejector pin.

The multiple sensors 4 include, for example, a tachometer for detecting the rotational speed of the motor that drives the screw 32, a tachometer for detecting the rotational speed of the motor that drives the movable platen 24, and a tachometer for detecting the rotational speed of the motor that drives the ejector pin.

The multiple sensors 4 include a load sensor for detecting the clamping force caused by the clamping device 2.

The multiple sensors 4 include a thermometer for detecting the temperature of the hopper 33, a thermometer for detecting the temperatures at one or more locations in the cylinder 31, and a thermometer for detecting the temperatures at one or more locations in the nozzle 31a.

The sensors 4 additionally include an arbitrary detector capable of detecting physical quantities that contribute to estimation of the quality of a molded product.

The control device 5 is a computer for performing operation control of the injection molding machine 1. The control device 5 is set with a molding condition for operating the injection molding machine 1. The control device 5 outputs instruction signals to the injection molding machine 1 based on various set values indicated by the molding condition and detection values from the sensors 4, to operate the injection molding machine 1.

Furthermore, the control device 5 is provided with a communication unit, which transmits and receives information to and from the information processing apparatus 7, an operation panel and the like that are not illustrated. More specifically, the control device 5 transmits data related to a molding condition set to the injection molding machine 1 to the information processing apparatus 7. The data related to a molding condition is, for example, the name of a molding condition for identifying the molding condition set to the injection molding machine 1. The data related to a molding condition may be details of the molding condition. The data related to a molding condition is not particularly limited if the details of the molding condition are reflected thereon.

Moreover, the control device 5 outputs signals related to a command value based on the molding condition to the logging device 6 during the injection molding process.

In addition, the control device 5 receives an estimation result of the quality of a molded product transmitted from the information processing apparatus 7 and displays the received estimation result. The control device 5 further outputs an alert according to the estimation result of the quality of a molded product. In addition, the control device 5 receives information indicating a method to change set values for the molding condition that is transmitted from the information processing apparatus 7 and displays the method to change the set values.

The logging device 6 is a Programmable Logic Controller (PLC), for example. The logging device 6 samples analog signals output from the multiple sensors 4 at a predetermined period to perform AD conversion and stores the converted signals as physical quantity data indicating the time-series physical quantities, in the internal memory. The logging device 6 further samples a signal of a command value output from the control device 5 at a predetermined period to perform AD conversion and stores the converted signal as time-series command value data, in the internal memory. For example, the logging device 6 stores the physical quantity data and the command value data as a CSV file. The logging device 6 transfers for each cycle of the injection molding a file of the logged physical quantity data and command value data to the information processing apparatus 7. The physical quantity data is data, which is obtained during the injection molding process for obtaining a molded product with the injection molding machine 1, related to the operation of the injection molding machine 1 and the quality of a molded product.

### <Information Processing Apparatus 7>

The information processing apparatus 7 is a computer that estimates quality or defective degree of a molded product produced by the injection molding machine 1. The information processing apparatus 7 executes processing of sounding an alert and presenting a method to change the set values for the molding condition in the case where the quality of a molded product is below predetermined quality. The information processing apparatus 7 includes a processing unit 71, a storage unit 72, an operation unit 73, an acquisition unit 74 and a display unit 75 as hardware structures. Note that the information processing apparatus 7 may be a server device connected to a network. Moreover, the information processing apparatus 7 may be configured with multiple computers to perform distributed processing, may be realized by multiple virtual machines set up in a single server, or may be realized using a cloud server.

The processing unit 71 is a processor including an arithmetic processing circuit such as a CPU (Central Processing Unit), a multi-core CPU, a GPU (Graphics Processing Unit), a General-purpose computing on graphics processing units (GPGPU), a Tensor Processing Unit (TPU), an Application Specific Integrated Circuit (ASIC) , an Field-Programmable Gate Array (FPGA) and an Neural Processing Unit (NPU), an internal storage device such as a ROM (Read Only Memory) and a RAM (Random Access Memory), an I/O terminal, a clock unit and the like. The processing unit 71 implements a data collection method according to Embodiment 1 by executing a computer program (program product) 72a stored in the storage unit 72 to be described later. Note that each functional part of the information processing apparatus 7 may be realized in software, or a part or all of the functional parts may be realized in hardware.

The storage unit 72 is a nonvolatile memory such as a hard disk, an EEPROM (Electrically Erasable Programmable ROM), or a flash memory. The storage unit 72 stores a computer program 72a for causing the computer to execute processing of estimating, for example, the quality of a molded product.

In addition, the storage unit 72 stores time-series physical quantity data obtained from the injection molding machine 1 for each shot. The storage unit 72 stores a folder (hereinafter referred to as "temporary storage folder 72b") for temporarily storing a file of physical quantity data acquired for each shot via the logging device 6 and folders (hereinafter referred to as "sorting folder 72c") for storing temporarily stored files sorted by the molding condition and data collection period.

The computer program 72a according to Embodiment 1 may be recorded on a recording medium 8 so as to be readable by the computer. The storage unit 72 stores the computer program 72a read from the recording medium 8 by a reading device. The recording medium 8 is a semiconductor memory such as a flash memory. Furthermore, the recording medium 8 may be an optical disc such as a CD (Compact Disc)-ROM, a DVD (Digital Versatile Disc)-ROM, or a BD (Blu-ray (registered trademark) Disc). Moreover, the recording medium 8 may be a magnetic disk such as a flexible disk or a hard disk, or a magneto-optical disk. In addition, the computer program 72a according to Embodiment 1 may be downloaded from an external server connected to a communication network and may be stored in the storage unit 72.

The operation unit 73 is an input device such as a touch panel, a soft key, a hard key, a keyboard, a mouse or the like.

The acquisition unit 74 is a communication circuit that acquires physical quantity data and command value data based on a molding condition that are output from the logging device 6. The acquisition unit 74 further communicates with the control device 5 to acquire data related to a molding condition and other data necessary for estimating quality of a molded product.

The display unit 75 includes a liquid crystal panel, an organic EL (Electro Luminescence) display, an electronic paper display and a plasma display. The display unit 75 displays various information according to image data provided from the processing unit 71.

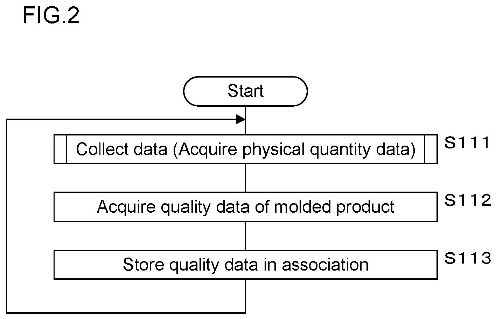

FIG. 2 is a flowchart illustrating a reference data collection processing procedure according to Embodiment 1. The processing unit 71 of the information processing apparatus 7 collects time-series physical quantity data related to an operation of the injection molding machine 1 obtained through detection by the multiple sensors 4 during the injection molding process for obtaining a molded product with the injection molding machine 1 and time-series command value data (step S111). The physical quantity data is information for estimating the quality of a molded product. The processing at step S111 is repeatedly executed to collect physical quantity data over multiple injection molding cycles.

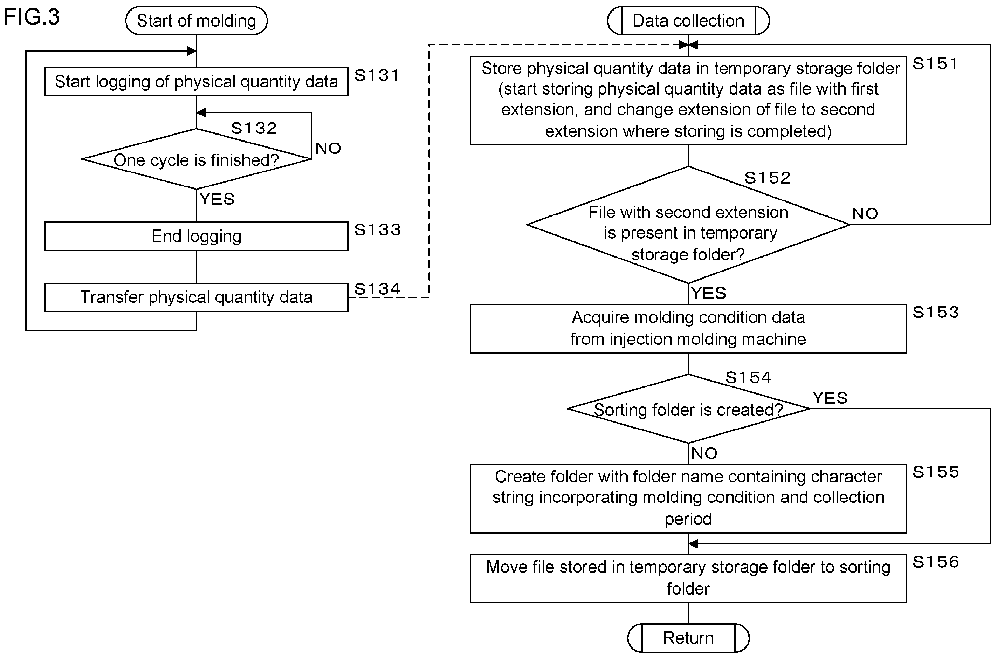

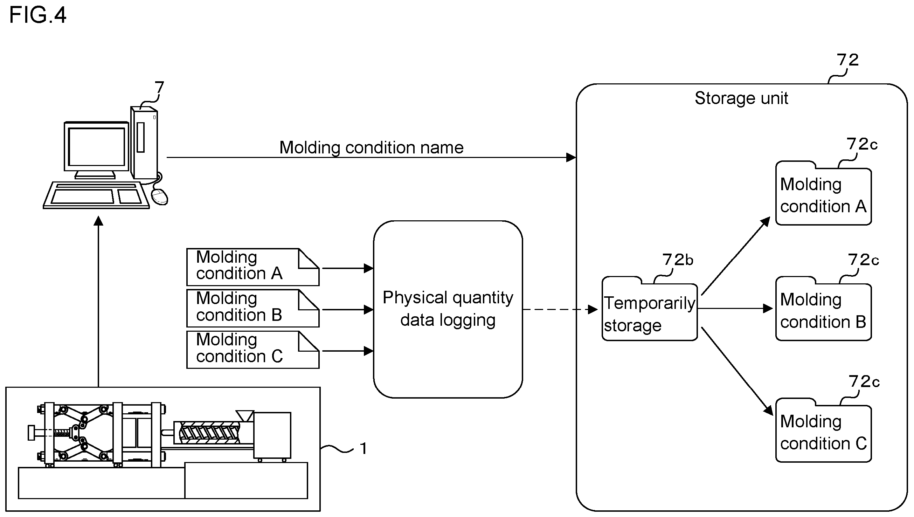

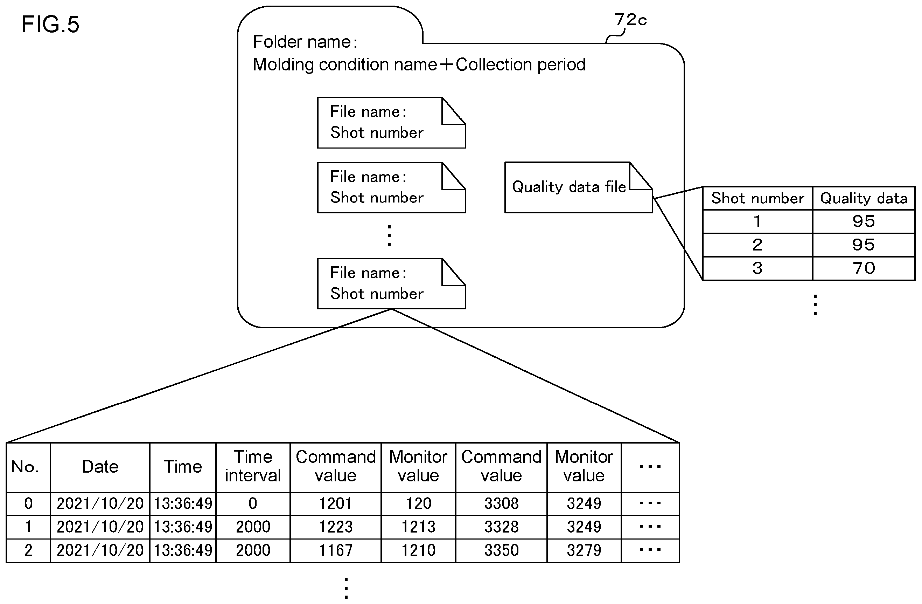

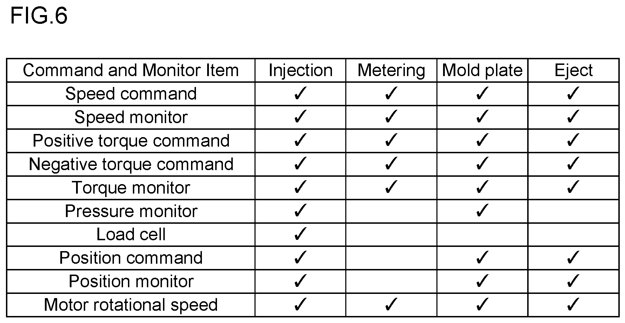

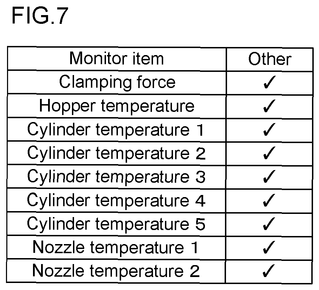

FIG. 3 is a flowchart illustrating a data collection processing procedure according to Embodiment 1. FIG. 4 is a conceptual diagram indicating a data collection method according to Embodiment 1. FIG. 5 is a conceptual diagram indicating the contents of a file stored by the data collection method according to Embodiment 1. FIG. 6 and FIG. 7 are tables depicting examples of logging data items.

When the molding process by the injection molding machine 1 is started, the logging device 6 starts logging the time-series physical quantity data obtained through detection by the sensors 4 and the time-series command value data (step S131). In other words, the logging device 6 starts the processing of storing signals indicating the physical quantities output from the multiple sensors 4 as time-series physical quantity data. The specific details of the physical quantity data will be described below. In addition, the logging device 6 starts processing of storing command value signals for operating the injection molding machine 1 as time-series command value data together with the physical quantity data.

The logging device 6 then determines whether or not one cycle of injection molding has been finished (step S132). If determining that one cycle of injection molding has not been finished (step S132: NO), the logging device 6 continues to log physical quantity data. If determining that one cycle of injection molding has been finished (step S132: YES), the logging device 6 ends the logging of physical quantity data and command value data (step S133).

The logging device 6 then transfers the time-series physical quantity data for one shot to the information processing apparatus 7 (step S134).

The information processing apparatus 7 receives a file containing the physical quantity data and the command value data that is transferred from the logging device 6, and stores the received file containing the physical quantity data and the command value data in the temporary storage folder 72b (step S151). Specifically, when storing a file containing physical quantity data and command value data in the temporary storage folder 72b as illustrated in FIG. 4, the information processing apparatus 7 starts storing the physical quantity data and the command value data as a file with a first extension, and changes the extension of the file stored in the temporary storage folder 72b from the first extension to a second extension in the case where storing of the physical quantity data and the command value data is completed. For example, the second extension is "csv," while the first extension has a different name from the second extension.

The file name of a file containing the time-series physical quantity data and command value data for one shot may include a shot number though not particularly limited thereto. The physical quantity data and command value data are stored, for example, in a csv format. As data items, a serial number "No." indicating a logging point, a logging year, month and date, a logging time, an elapsed time from a previous logging point to a current logging point (represented in µsec, for example), and various command values and monitor values (physical quantities) output from the control device 5 to the injection molding machine 1 are stored in association with each other as illustrated in FIG. 5.

The various command values and monitor values as physical quantities stored in a file include data as illustrated in FIGs. 6 and 7. The "Command and Monitor Item" in the left column indicates the details of the command value to be output to the injection molding machine 1 and the details of the detected physical quantity. The "Injection" and "Metering" columns indicate command values and monitor values related to the operation of the screw 32, the "Mold Plate" column indicates command values and monitor values related to the operation of the mold clamping device 2, and the "Eject" column indicates command values and monitor values related to an operation of the ejector pin for removing a molded product from the metal mold 21. The checked items indicate the presence of a command value or a monitor value to be recorded.

Next, the processing unit 71 of the information processing apparatus 7 constantly monitors whether or not a file is stored in the temporary storage folder 72b, and determines whether or not a file with the second extension is present in the temporary storage folder 72b (step S152). If determining that a file with the second extension is not present in the temporary storage folder (step S152: NO), the processing unit 71 continues to monitor a file stored in the temporary storage folder 72b.

If determining that a file with the second extension is present in the temporary storage folder (step S152: YES), the processing unit 71 acquires current molding condition data from the injection molding machine 1 (step S153). The molding condition data includes data indicating a molding condition restrictively set in the injection molding machine 1, a molding condition name assigned to the molding condition, and other data representing the molding condition. The molding conditions set in the injection molding machine 1 vary depending on a molded product, and the details of the physical quantity data collected from the injection molding machine 1 also vary with different molding conditions. The information processing apparatus 7 acquires the molding condition data in order to separately store the physical quantity data for each molding condition.

Next, the processing unit 71 determines whether or not the soring folder 72c with the folder name containing the character string incorporating the molding condition and the collection period of the physical quantity data has already been created as a folder to store the physical quantity data in the temporary storage folder 72b (step S154).

If determining that the sorting folder 72c has not been created (step S154: NO), the processing unit 71 creates a folder with the folder name containing the character string incorporating the molding condition and the collection period of the physical quantity data as a folder to store the physical quantity data (step S155). The folder name is assumed to be "Molding Condition Name/YYYY/MM/DD/Collection Start Time-Collection End Time," for example. The "Molding Condition Name" is the name of a molding condition set in the injection molding machine 1. The "YYYY," "MM," and "DD" indicate the year, month and date at which physical quantity data was collected. The "Collection Start Time" and the "Collection End Time" indicate the time (start time and end time) at which physical quantity data to be stored in the folder was collected. The time interval between the collection start time and the collection end time is not particularly limited. For example, the collection end time may be set as follows. In the first example, the processing unit 71 regards the timing when the molding condition is changed as a collection end time. In the second example, if more than 30 minutes have elapsed from the last shot, the processing unit 70 regards the timing when 30 minutes have elapsed as a collection end time. In the third example, the processing unit 71 sets a predetermined collection period, such as 30 minutes.

In the first and third examples, since the collection end time is not determined during the collection of physical quantity data, a pseudonym maybe set as a folder name. For example, the processing unit 71 may assign a folder name of the pseudonym "current" to the folder or may leave only the collection end time blank. The method of putting a pseudonym is not particularly limited.

Though an example where a molding condition name is included in the name of the sorting folder 72c is described here, characters on which a molding condition set in the injection molding machine 1 is reflected may be contained. For example, characters representing the details of the molding condition may be used instead of the molding condition name. In short, it is sufficient to be able to identify the molding conditions set in the injection molding machine 1.

If determining that the sorting folder 72c has been created at step S154 (step S154: YES) or after completion of the processing at step S155, the processing unit 71 moves the file with the second extension stored in the temporary storage folder 72b to the sorting folder 72c having the corresponding molding condition and data collection period (step S156) and ends the processing. In other words, the processing unit 71 moves to the sorting folder 72c for each shot the physical quantity data obtained when injection molding is performed under the molding condition contained in the folder name of the sorting folder 72c during the collection period contained in the folder name thereof and stores the physical quantity data therein.

The processing at step S156 is an example of the processing of storing for each shot the acquired physical quantity data in the storage unit 72 in association with the molding condition set in the injection molding machine 1.

Returning to FIG. 2, the processing unit 71 acquires quality data indicating the quality of a molded product produced by the injection molding machine 1 (step S112). The method of acquiring quality data is not particularly limited. The operator may visually judge the quality of a molded product and input the judgment result to the information processing apparatus 7, or the computer may judge the quality of a molded product using a camera, a position sensor, a weight sensor or the like.

The processing unit 71 then stores the quality data indicating the quality of the molded product that is injection-molded when the stored physical quantity data was obtained, in association with the file of the physical quantity data (step S113). For example, the processing unit 71 stores a quality data file in which a shot number and quality data are associated with each other, in the sorting folder 72c. Note that the method of associating each file stored in the sorting folder 72c with quality data is one example, and the method of associating the data is not particularly limited. Quality data may be recorded in the file of the physical quantity data, or quality data may be recorded as a property or other attribute information of the file.

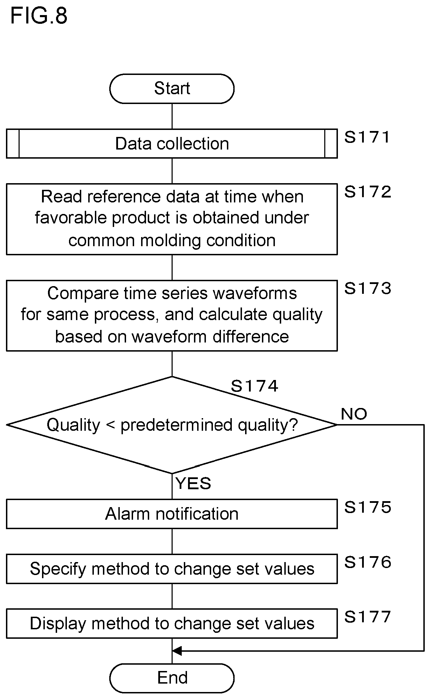

FIG. 8 is a flowchart illustrating a quality estimation processing procedure according to Embodiment 1. The processing unit 71 of the information processing apparatus 7 collects time-series physical quantity data related to the operation of the injection molding machine 1 that is obtained through detection by the multiple sensors 4 during the injection molding process for obtaining a molded product with the injection molding machine 1 (step S171).

The processing unit 71 then reads from the storage unit 72 the reference data at a time when a favorable product is obtained under the condition common to the condition when the collected physical quantity data is obtained (step S172). The reference data at a time when a favorable product is obtained corresponds to physical quantity data for which the quality indicated by the quality data is higher than a specific standard indicating favorable products among the files stored in the sorting folders 72c.

Next, the processing unit 71 compares a time-series waveform indicated by the physical quantity data acquired during the quality estimation of a molded product with a time-series waveform indicated by the read reference data, and calculates the difference between the time-series waveforms as quality of the molded product (step S173). The difference is, for example, the sum of squares error of the time series waveforms.

It is more preferable to compare the time-series waveforms with each other over the period of the same process out of the processes constituting a cycle of injection molding. By referring to the molding condition, the processing unit 71 can specify a time period in one cycle for each of the processes constituting the injection molding process. The processing unit 71 can extract the time-series waveforms corresponding to the specified time period of each process among the time-series waveforms during one cycle. The processing unit 71 can more accurately estimate the quality of a molded product by comparing the time series waveforms with each other for the same process.

Next, the processing unit 71 determines whether or not the calculated quality is below predetermined quality (step S174). If determining that the quality of the molded product is below the predetermined quality (step S174: YES), the processing unit 71 executes an alarm notification processing (predetermined processing) (step S175). In other words, the processing unit 71 notifies the operator by sound, lighting or the like that the quality of the molded product has deteriorated. The alert method is not particularly limited, and the processing unit 71 may transmit a signal informing an alert to the control device 5. In addition, the processing unit 71 may be configured to transmit a signal informing an alert to a terminal carried by the operator.

Next, the processing unit 71 specifies a method to change the set values related to the molding condition based on the physical quantity data acquired during the quality estimation and the physical quantity data stored in the storage unit 72 (step S176) and displays the specified method to change the set values on the display unit 75 (step S177). For example, by comparing the time-series waveform of the physical quantity data detected during quality control and the time-series waveform of the reference data for each item of the physical quantity to be detected, the physical quantity with a large difference is specified. Then, the processing unit 71 may display that the physical quantity is higher or lower than the reference data on the display unit 75, or via the control device 5.

Note that the processing unit 71 may be configured to transmit a method to change the set values of the molding condition to the control device 5 and show the method on the display of the control device 5.

Though the processing illustrated in FIG. 8 represents the processing of estimating the quality of a single molded product based on the physical quantity data for one shot, by repetitively executing the processing in FIG. 8 during the molding process, the processing unit 71 can monitor the quality of molded products mass-produced by repetition of the injection molding cycles.

As described above, according to the injection molding system pertaining to Embodiment 1, the physical quantity data obtained during the injection molding process for each shot can be stored in association with a molding condition and a data collection period. By being associated with the molding condition and the data collection period, the physical quantity data can easily be utilized.

Furthermore, the sorting folder 72c with a folder name including a character string related to a molding condition and a data collection period has been created. By storing therein a file containing physical quantity data corresponding to the sorting folder 72c, physical quantity data as a resultant of the injection molding performed in the past can simply be searched and referred to, which facilitates more efficient utilization of physical quantity data.

As an example of the utilization, by comparing the physical quantity data obtained during quality control with the past physical quantity data collected under the same condition during similar period, similar physical quantity data can be specified. If the past physical quantity data is associated with the quality data of the molded product, quality of the molded product can be estimated through comparison between the physical quantity data.

Moreover, the information processing apparatus 7 according to Embodiment 1 can more accurately specify similar physical quantity data by comparing the time-series waveforms for the same process out of the processes constituting a cycle of the injection molding among the time-series waveforms indicated by the physical quantity data, to estimate the quality of a molded product.

Since the command values as well as the monitor values are stored in a file in association with each other, it is possible to specify a file obtained when the molding condition and physical quantity data are similar and the quality data is favorable and estimate a method to change the set value according to on the current molding condition based on the command values at that time.

In addition, an alert may be output to notify the operator of molding abnormality in the case where the quality of a molded product is below predetermined quality by comparing physical quantity data with each other.

By transferring a file of the logged physical quantity data to the information processing apparatus 7 so as to be stored in the temporary storage folder 72b and changing the extension of the file when the file is sorted in the sorting folder 72c, the file can reliably be moved. Specifically, whether or not the physical quantity data is being transferred can be determined by the file extension, and after confirming the completion of the file transfer, the file in the temporary storage folder 72b can be moved to the sorting folder 72c.

While an example where the command value data together with the physical quantity data are logged is described in Embodiment 1, only the physical quantity data may be logged and stored for estimation of the quality of a molded product.

### Embodiment 2

The injection molding system according to Embodiment 2 is different from that of Embodiment 1 in the quality estimation processing procedure. Since the other configurations of the injection molding system are similar to those of the injection molding system in Embodiment 1, similar parts are designated by same reference codes and detailed description thereof will not be made.

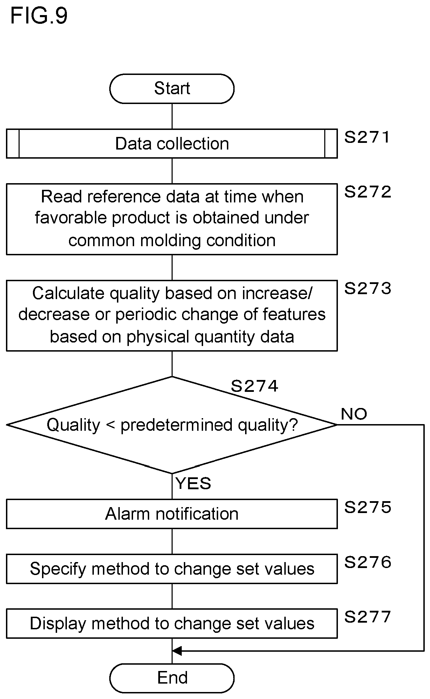

FIG. 9 is a flowchart illustrating a quality estimation processing procedure according to Embodiment 2. The processing at steps S271 to S272 and processing at steps S274 to S277 in FIG. 9 are respectively similar to those of steps S171 to S172 and S174 to S177 in Embodiment 1 except for the quality estimation processing.

By comparing the increase/decrease or periodic change of features based on the physical quantity data obtained during quality control collected at step S271 with the increase/decrease or periodic change of features based on the reference data, the processing unit 71 of the information processing apparatus 7 according to Embodiment 2 judges the quality of a molded product (step S273). For example, the processing unit 71 calculates the similarity of the increase/decrease or periodic change of features as the quality of a molded product. A molded product may be calculated by considering such that the higher similarity with the reference data corresponding to a favorable product indicates higher quality of a molded product, and the lower similarity indicates the lower quality of a molded product.

According to the injection molding system pertaining to Embodiment 2 configured as described above, quality of molded products can be estimated utilizing the past physical quantity data as in Embodiment 1.

The means for solving the present disclosure is further described.

### Clause 1

A data collection method, comprising:
acquiring time-series physical quantity data related to an operation of an injection molding machine acquired in an injection molding process for a molded product with the injection molding machine; and
storing in a storage unit physical quantity data acquired over a plurality of injection molding cycles in association with a character string incorporating a molding condition set in the injection molding machine and a collection period of the physical quantity data.

### Clause 2

The data collection method according to clause 1, further comprising:
creating a folder with a folder name including the character string and the collection period; and
storing, in the folder for each shot, physical quantity data obtained when injection molding is performed under the molding condition included in the folder name during the collection period included in the folder name.

### Clause 3

The data collection method according to clause 1 or 2, further comprising:
storing a file including the acquired physical quantity data in a temporary storage folder;
monitoring whether or not the file is stored in the temporary storage folder;
creating the folder with a folder name including the character string and the collection period in a case where the file is stored in the temporary storage folder; and
moving the file stored in the temporary storage folder to the created folder.

### Clause 4

The data collection method according to any one of clauses 1 to 3, further comprising:
starting storing physical quantity data as a file with a first extension when the file including physical quantity data is stored in the temporary storage folder, and changing an extension of the file stored in the temporary storage folder from the first extension to a second extension in a case where storing the physical quantity data is completed; and
creating the folder and moving the file to the folder in a case where the file with the second extension is stored in the temporary storage folder.

### Clause 5

The data collection method according to any one of clauses 1 to 4, wherein the character string includes a name of a molding condition set in the injection molding machine.

### Clause 6

The data collection method according to any one of clauses 1 to 5, wherein the character string includes a character indicating a molding condition set in the injection molding machine.

### Clause 7

The data collection method according to any one of clauses 1 to 6, further comprising storing physical quantity data as a file associated with a date and time when injection molding is performed, time information to specify a detection point of physical quantity data, acquired physical quantity data, and a command value related to an operation of the injection molding machine when the physical quantity data is acquired.

### Reference Signs List

1 injection molding machine
2 mold clamping device
3 injection device
4 sensor
5 control device
6 logging device
7 information processing apparatus
8 recording medium
20 bed
21 metal mold
22 fixed platen
23 clamping housing
24 movable platen
25 tie-bar
26 clamp mechanism
27 movable mold
28 fixed mold
30 base
31 heating cylinder
31a nozzle
32 screw
33 hopper
34 nozzle touch device
35 drive device
71 processing unit
72 storage unit
72a computer program
72b temporary storage folder
72c sorting folder
73 operation unit
74 acquisition unit
75 display unit

## Claims

1. A data collection method, comprising:
acquiring time-series physical quantity data related to an operation of an injection molding machine acquired in an injection molding process for a molded product with the injection molding machine; and
storing in a storage unit physical quantity data acquired over a plurality of injection molding cycles in association with a character string incorporating a molding condition set in the injection molding machine and a collection period of the physical quantity data.

2. The data collection method according to claim 1, further comprising:
creating a folder with a folder name including the character string and the collection period; and
storing, in the folder for each shot, physical quantity data obtained when injection molding is performed under the molding condition included in the folder name during the collection period included in the folder name.

3. The data collection method according to claim 2, further comprising:
storing a file including the acquired physical quantity data in a temporary storage folder;
monitoring whether or not the file is stored in the temporary storage folder;
creating the folder with a folder name including the character string and the collection period in a case where the file is stored in the temporary storage folder; and
moving the file stored in the temporary storage folder to the created folder.

4. The data collection method according to claim 3, further comprising:
starting storing physical quantity data as a file with a first extension when the file including physical quantity data is stored in the temporary storage folder, and changing an extension of the file stored in the temporary storage folder from the first extension to a second extension in a case where storing the physical quantity data is completed; and
creating the folder with a folder name including the character string and the collection period and moving the file to the created folder in a case where the file with the second extension is stored in the temporary storage folder.

5. The data collection method according to any one of claims 1 to 4, wherein the character string includes a name of a molding condition set in the injection molding machine.

6. The data collection method according to any one of claims 1 to 5, wherein the character string includes a character indicating a molding condition set in the injection molding machine.

7. The data collection method according to any one of claims 1 to 6, further comprising storing physical quantity data as a file associated with a date and time when injection molding is performed, time information to specify a detection point of physical quantity data, acquired physical quantity data, and a command value related to an operation of the injection molding machine when the physical quantity data is acquired.

8. A data collection device comprising a processing unit, wherein
the processing unit
acquires time-series physical quantity data related to an operation of an injection molding machine acquired in an injection molding process for a molded product with the injection molding machine; and
stores in a storage unit physical quantity data acquired over a plurality of injection molding cycles in association with a character string incorporating a molding condition set in the injection molding machine and a collection period of the physical quantity data.

9. A computer program causing a computer to execute processing of:
acquiring time-series physical quantity data related to an operation of an injection molding machine acquired in an injection molding process for a molded product with the injection molding machine; and
storing in a storage unit physical quantity data acquired over a plurality of injection molding cycles in association with a character string incorporating a molding condition set in the injection molding machine and a collection period of the physical quantity data.
